# EUROPEAN PATENT APPLICATION

(11) **EP 3 133 231 A1**
(43) Date of publication of application: **22.02.2017**
(21) Application number: 16177398.1
(22) Date of filing: 30.06.2016
(51) Int. Cl.: E05F 1/10, E05D 3/02, H02B 1/38, H02B 1/50

(54) **CABINET WITH ROTATING DOOR**

(30) Priority: 30.06.2015 PT 15108634
(71) Applicant: Al-Fabrica de Material Electrico S.A., 2431-968 Marinha Grande (PT)
(72) Inventor: CONSTÂNCIO RODRIGUES, Daniel José, 2430-279 Marinha Grande (PT)
(74) Representative: Patentree, Lda.

(57) **Abstract**

Cabinet comprising a structure which can be considered rigid with side walls (2). The front wall is constituted by a rotating door (8) which can rotate about the axis (21) and hinge (12, 13) with the axis (21) thereof to allow access therein. The claw (11) for cabinet rotating doors (8), preferably outdoor cabinets (1), favours protection against water entry inside the outdoor cabinet (1), between the rotating door (8) and the parts of the structure (2), sealing normally conferred by a sealant (14). The claw (11) also favours impact strength by increasing the number of contact points between the rotating door (8) and the side walls (2) of the cabinet (1). The present disclosure applies to cabinets, preferably to outdoor cabinets, used as protecting casings for domestic or industrial electric, gas, water panel, preferably used for power distribution networks.

## Description

### Technical field

The present disclosure relates to a cabinet with a rotating door for access to its interior, preferably to an outdoor cabinet, wherein a reduced probability of water entry and/or good impact strength is intended, normally used as protecting casings for domestic or industrial electric panels, preferably of power distribution networks.

Often these cabinets are also used as protecting casings for the equipment of water or gas distribution networks, such as consumer counters, as well as a complementary range of lighting and telecommunications equipment. Thus, these outdoor cabinets are also installed inside homes, buildings, or other equipment.

The present disclosure applies to cabinets, preferably to outdoor cabinets, used as protecting casings for domestic or industrial gas, water, electric panels preferably used for power distribution networks. In this way, the present disclosure is within the field of domestic and urban furniture.

### Background

There are several types of cabinets with different dimensions and shapes, one or more doors, of modular or non-modular construction, a structure constructed of various types of material such as aluminum or polymer steels, pedestal for supporting thereof and for interface passing, wherein interfaces may also pass through the side or rear walls thereof.

Cabinets manufactured for this type of utility must comply with standards for protection against water and small particle entry, IP, European standard EN 60529, and impact strength standards, IK, having commercial benefits and larger areas of application when having good performances. In particular, door cabinets, with a rectangular shape when viewed from the front, have a performance in terms of water entry probability, IP, which varies along the four sides of the door.

It should also be noted that such cabinets are also usually subject to other types of tests, such as thermal conductivity tests, from the inside to the outside. Normally, it is intended that thermal conductivity is maximal, so that when a considerable amount of thermal energy is dissipated within the cabinet, for example due to the passage of electric current, internal it does not exceed the maximum recommended values for the equipment installed in the cabinet. This, in turn, implies the construction of its exterior walls, ceiling and door with a thin thickness, which ends up being an enemy both to the low probability of water entry and to the high impact strength.

CN201134624 and CN202260162 describe two of the most usual ways of hindering water entry through the door and cabinet structure, but in both cases only one conventional hinge and a seal are used which are pressed by door faces without using any other element attached to the door to pull it into the cabinet when the door is close to finish its closing movement.

WO2009088434 describes a process for improving the door seal, wherein seals are movable, in principle actuated by the door latch in a direction substantially perpendicular to the face of the door, not using any other element attached to the door to pull it into the cabinet when the door is close to finish its closing movement. For this reason, this solution is also not entirely satisfactory.

The present disclosure proposes to solve the problems described in the prior art by presenting a cabinet with a rotating door, which further comprises a claw which, when applied to the door of said cabinet, or other furniture pieces commonly used as protecting casings, avoids water entry still providing good impact strength and thermal conductivity.

These facts are described in order to illustrate the technical problem solved by the embodiments of the present document.

### General description

The present disclosure discloses a cabinet with a rotating door for access to its interior, preferably to outdoor cabinets, wherein a reduced probability of water entry and/or good impact strength is intended, normally used as protecting casings for domestic or industrial electric panels, preferably of power distribution networks.

Thus, a cabinet alternative to the existing ones has been developed, which is easier to assemble, lighter, and has reinforced seal complying with the standard EN 60529 and also impact strength standard, IK.

In the context of the present disclosure, the term "cabinet" means "cabinet with a rotating door for access to its interior"; the term "door" means "rotating door"; the term "seal" shall be understood as being a "seal of flexible and hydrophobic material".

One of the aspects of the present disclosure concerns a cabinet comprising on its front side a rotating door, which can rotate about the hinge axis so as to allow access to its interior. This movement can be blocked by handle-actuated latches.

In an embodiment of the present disclosure, the hinges are not visible from the outside of the cabinet when the door is closed, so as to confer greater security to the cabinet-forming set. Between the rotating door (8) and the side and bottom parts there is a seal of flexible and hydrophobic material. The joining zones between the remaining parts of the cabinet, which are jointly connected among each other, may also comprise a joint of a malleable / soft and hydrophobic material (water repellent) in order to ensure insulation of the interior of the cabinet.

In an embodiment, the flexible and hydrophobic material is preferably glued to the rotating door in a channel existing along its entire perimeter, which, when the rotating door closes, is compressed between it and fins (23) of the parts (2, 4, 5, 7).

In an embodiment, the claws (11) are attached to the rotating door (8) on the side of its hinges (12, 13), so as to promote better contact pressure distribution, since the contact between the seal (14) and the fins (23) of the parts (2, 4, 5, 6, 7) is only ensured by the presence of contact pressure along the entire perimeter of the seal. Thus, by the force exerted by the claws (11) it is possible to distribute the contact pressure as evenly as possible along the entire perimeter of the seal thus maintaining it in order to improve the internal insulation of the cabinet (1) and the strength of the rotating door (8) to possible impacts.

In an embodiment, the cabinet (1) is supported on a pedestal (10), through which interfaces with the exterior, electric cables, gas pipes, water pipes, or others may pass.

In an embodiment, the seal (14) is arranged in a channel (24) of the door (8) and is pressed against a fin (23) of the cabinet structure (1), or vice versa, when the door (8) ends its closing rotating movement.

In an embodiment, one side of the door (8) is joined to the structure of the cabinet (1) by the hinges (12, 13), while on the opposite side the door jointed to the structure of the cabinet (1) by latch elements that lock the door in the closed position. Thus, contact pressure distribution along the perimeter of the seal (14) depends on the manufacturing tolerances of the several components, especially on both sides where neither hinges nor latch elements are provided.

In an embodiment, for cost-effective reasons, the latch elements (31, 32, 33) tend to be arranged only close to the side opposite the hinge (12, 13), due to the proximity to the handle (9) and actuating ergonomics thereof.

In an embodiment, the claw (11) for cabinet (1) door (8) is intended to improve the uniformity of the pressure distribution along the entire perimeter of the seal, thereby reducing the likelihood of water entry into the cabinet by the interface of the rotating door (8) with the cabinet structure parts.

In an embodiment, the claw (11) for the cabinet rotating door (8) further allows increasing the door strength against impacts from the outside towards the inside, for example, caused by vandalism, by previously assisting in the uniformity of the contact pressure along the perimeter of the seal.

In an embodiment, when impacts or stresses arise from the inside to the outside, for example, due to the outbreak of fire or explosions caused by gas leakage or even break-in actions, the claw (11) for the rotating door (8) constitutes an important structural reinforcement of the door, thus substantially improving the behavior of the cabinet in this type of situation.

The term "comprises" or "comprising" when used herein is intended to indicate the presence of the mentioned features, elements, integers, steps and components, but does not preclude the presence or addition of one or more other features, elements, integers, steps and components, or groups thereof.

### Brief description of the drawings

For an easier understanding, drawings are herein attached, which represent preferred embodiments which are not intended to limit the scope of the present disclosure.

Therein, one can observe an embodiment example of an outdoor cabinet according to the present description, in this case, of parallelepipedic format and in modular construction wherein:
- 1: - Cabinet;
- 2: - Side walls;
- 3: - Outer ceiling;
- 4: - Rear wall;
- 5, 6: - Corner;
- 7: - Inner ceiling;
- 8: - Rotating door;
- 9: - Handle;
- 10: - Pedestal;
- 11: - Claw for the rotating door (8);
- 12, 13: - Hinges;
- 14: - Seal;

- 15: - Bottom;
- 16: - Corner;
- 21: - Hinge axis (12, 13) for rotating the rotating door (8);
- 23: - Fin;
- 30, 31, 32: - Latches.

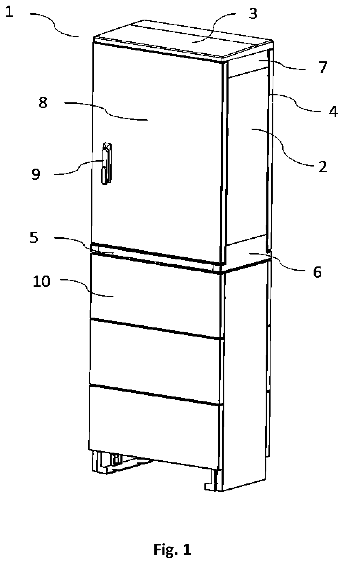

**Figure 1****:** Three-dimensional view of the cabinet (1), in a front-side-upper perspective, with the door (8) in a closed position and with a visible pedestal (10) example.

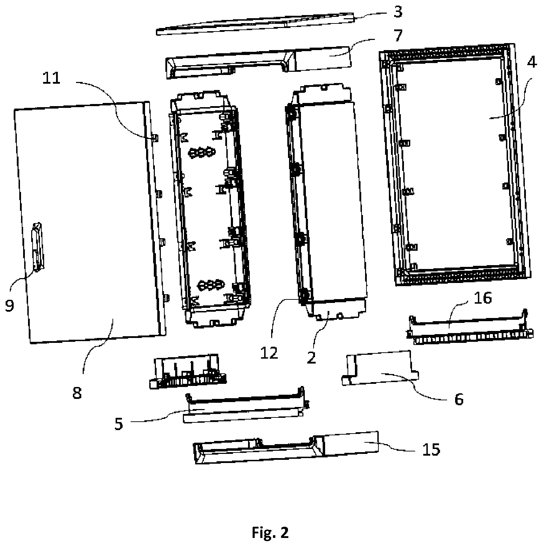

**Figure 2****:** Three-dimensional exploded view of the cabinet (1), in a front-side-upper perspective, with the door (8) in a closed position and with an invisible pedestal (10).

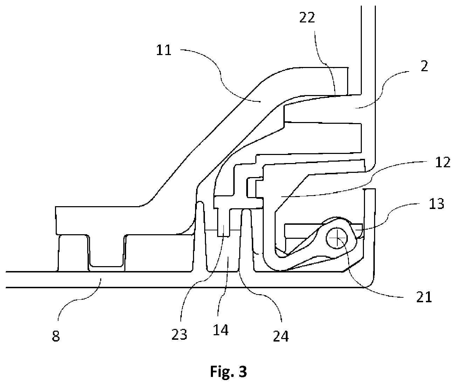

**Figure 3****:** Detail of the top view of the zone of the claw (11), seal (14) and hinge (12, 13) with corresponding axis (21), with all parts shown in cross-section and with the door (8) in a closed position, without the visible pedestal (11).

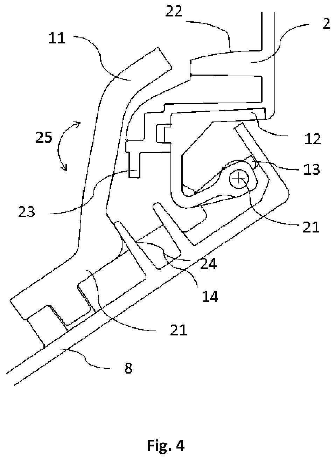

**Figure 4****:** Detail of the top view of the zone of the claw (11), seal (14) and hinge (12, 13) with correspondingaxis (21), with all parts shown in cross-section and with the door (8) in a position close to the open position, without the visible pedestal (11).

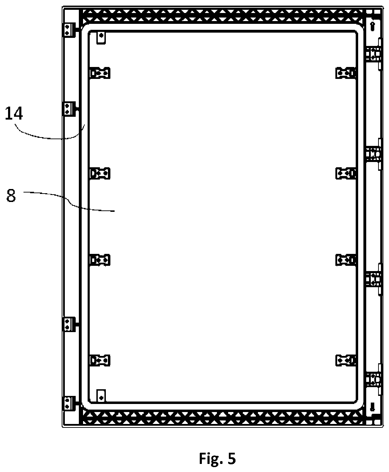

**Figure 5****:** View of the inner face of the door (8) and seal (14).

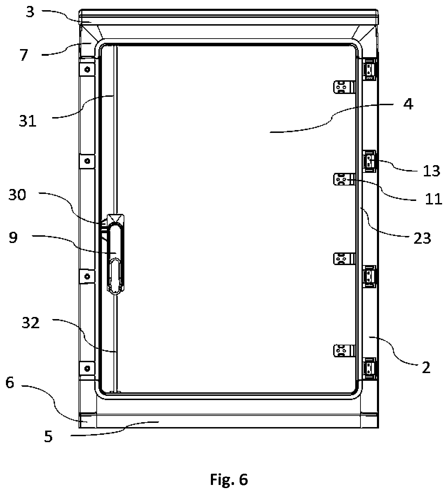

**Figure 6****:** Front view of the cabinet (1) with invisible door (8) and pedestal (10).
**Figure 7:** shows a top view, with part of the ceilings invisible or cut, the claw (11), and hinge (12, 13) with its axis (21), and the seal (14) being shown in enlarged size compared to the other parts of the cabinet (1) in order to improve the readability of the figure.

### Detailed description

The present disclosure discloses a claw, for a rotating door with application to cabinets for access to its interior.

The cabinet (1) of the present disclosure comprises the following elements: a rigid structure composed of a plurality of parts jointed among themselves by attaching means, defining the walls (2, 4), ceiling (3, 7) and the bottom (15) of the cabinet (1), a rotating door (8) at least one claw (11) for the rotating door, hinges (12, 13), seals (14), latches (30, 31, 32) and respective handle (9).

In one embodiment, the rigid structure may be embodied in a single part.

In another embodiment, the cabinet structure may comprise several parts jointed among themselves by attaching means, such as for example by means of screws.

In one embodiment, the rigid structure may comprise side walls (2), outer ceiling (3), rear wall (4), lower front corner (5), lower side corners (6), rear front corner (16), inner ceiling (7) and bottom (15).

In one embodiment, between the various interfaces between these parts (2, 4, 5, 6, 7, 15, 16) there should be a flexible material which, when compressed during the jointing of the parts (2, 4, 5, 6, 7, 15, 16), becomes the sealing element (14) against water entry through said interfaces.

In another embodiment, the front wall may comprise a door (8) which may rotate about the axis (21) of the hinges (13, 12), the rotational movement (25) can be locked by latches actuated by a handle (9).

In another embodiment, for safety purposes, the hinges (13, 12) are not visible from the outside of the cabinet (1) when the rotating door (8) is closed. When the latches (30, 31, 32) allow the door (8) to be opened, the later is joined to the rigid structure of the cabinet (1) only by the hinges (12, 13, 21) and may rotate about the axis (21), allowing access to the interior of the cabinet (1).

In another embodiment, a seal (14) is used to favour the sealing ability against water entry through the door interfaces (8) with the parts (2, 7, 15) of the rigid structure.

In another embodiment, the seal (14) may be placed in a channel-like recess (24) existing along the entire contour of the door (8) to interact with a fin (23) existing along the entire contour of the parts (2, 7, 15) of the rigid structure.

In another embodiment, as the rotating door approaches the closed position, the seal (14) begins to be compressed against the fin (23) of the parts (2, 7, 15) of the rigid structure, preventing water from passing through into the cabinet (1).

In another preferred embodiment, in order to ensure a good seal against water entry, it is necessary to ensure that it does not enter even when subjected to high pressure differential, in order to cause the water to enter inside the cabinet (1). Since this pressure differential may be sufficient to move the seal (14) away from the fin (23), in case it is not pre-compressed enough, or is unevenly pre-compressed along its perimeter, and therefore introduce the water into the cabinet, it is critical that the compression pressure of the seal (14) against the fin (23) is sufficiently high and uniform.

In another embodiment, in order to improve the protecting index against water entry in the cabinet (1), at least one claw (11), joined to the door (8), placed on its inner side, is used on the side of the hinges (12, 13), which upon complete closing movement of the door (8), contacts with surfaces (22) of the side wall (2) of the rigid structure placed on the inside of the cabinet (1), pulling the door (8) into the cabinet 1, thus increasing the compression pressure of the seal (14) against the fin (23) of the side wall (2).

In another embodiment, either simultaneously or consequently, the hinge (12, 13) and its axis (21) may also be impelled towards the inside of the cabinet (1). Thus, the strength against possible break-in or internal explosion is greatly improved. Since the precompression strength of the seal (14) in this zone is greater, the behavior upon external impact is also favoured.

In another embodiment, each claw (11) may comprise at least one body attached to the inner faces of the rotating door (8) of an outdoor cabinet (1) on the proximal side to that where the rotating hinges (12, 13) also are, which upon complete closing rotating movement (25) of the rotating door (8) interacts with surfaces (22) of the side walls (2) of the cabinet (1) pulling the rotating door (8) towards the inside of the cabinet (1).

In another embodiment, each claw (11) may be attached to inner faces of the door (8) through at least one attaching connection, for example being screwed, or may be materialised in the rotating door (8) itself, for example during its molding or production process.

In another embodiment, the seal (14) may be either arranged in a recess (24), whereby its removal, if needed be due to degradation, is made possible, or it may even be glued during the manufacture of the components. If the sealant is glued, when the rigid structure is modular and supplied to the customer in a disassembled condition, it is advantageous that the seal (14) is glued to a recess on the door (8) and not to recesses on the parts (2, 7, 15) of the rigid structure.

In another embodiment, the seal (14) of interface sealing of the rotating door (8) with the structure of the outdoor cabinet (1) can be placed or glued in a recess (22) materialised in the rotating door (8) itself to interact with a fin (23) materialised in the side wall (2) itself of the outdoor cabinet (1) or in a recess (22) materialised in the parts of the rigid structure of the outdoor cabinet (1) to interact with a fin (23) materialised on the rotating door (8) of the cabinet (1).

In another embodiment, the cabinet (1) can be supported on/attached to a pedestal (10), through which, as usual, interfaces with the exterior, electric cables, gas pipes, water pipes, or others pass.

The disclosure is of course not in any way restricted to the embodiments described and a person with ordinary skill in the art will foresee many possibilities to modifications thereof without departing from the basic disclosure as defined in the appended claims.

The following claims set out particular embodiments of the disclosure.

## Claims

1. Cabinet (1) comprising a rotating door (8), at least one claw (11) and at least two rotating hinges (12, 13), wherein:
the claw (11) is attached to the inner face of said rotating door (8) and to the side proximate to the one wherein the rotating hinges (12, 13) also are, so that, by the end of the rotating door (8) closure movement, said claw (11) interacts with a protuberant surface (22) of a side wall (2) of the cabinet, pulling the rotating door (8) towards the inside of said cabinet (1).

2. Cabinet (1) according to claim 1 wherein the protuberant surface (22) of the side wall (2) of the cabinet is a ramp.

3. Cabinet (1) according to any of the previous claims, comprising a seal (14) between the rotating door (8) and the side wall (2) of the cabinet.

4. Cabinet (1) according to the previous claim, comprising fins (23) in the parts opposite to the seal (14) arranged so that when the rotating door (8) closes, said seal (14) is compressed between the door and said fins (23).

5. Cabinet (1) according to any claim 3-4, wherein the seal (14) is attached to the rotating door by an adhesive material.

6. Cabinet (1) according to any claim 3-5, wherein the rotating door (8) has a channel (24) along the entire perimeter thereof and the seal (14) is attached to the rotating door (8) along said channel (24).

7. Cabinet (1) according to any previous claim, wherein the rotating hinges (12, 13) are not visible from the outside of the cabinet (1), when the rotating door (8) is closed.

8. Cabinet (1) according to any previous claim, further comprising a pedestal (10) for supporting the cabinet.

9. Cabinet (1) according to any previous claim, further comprising a latch, wherein the latch elements (31,32,33) are positioned on the side of the rotating door opposite the hinge (12, 13).

10. Cabinet (1) according to any previous claim wherein the cabinet is a domestic or industrial cabinet for electrical, gas, water panels, in particular cabinets for power distribution networks.

11. Cabinet modular system, comprising at least two cabinets (1) according to any previous claim.
